# EUROPEAN PATENT SPECIFICATION

(11) **EP 0 370 708 B1**
(45) Date of publication and mention of the grant of the patent: **27.07.1994**
(21) Application number: 89311935.4
(22) Date of filing: 17.11.1989
(51) Int. Cl.: A01K 95/00

(54) **Fishing weight**
Angelblei
Plomb de pêche

(30) Priority: 25.11.1988 GB 8827630
(43) Date of publication of application: 30.05.1990
(73) Proprietor: Keightley, Ross, Purley Surrey CR3 2NN (GB)
(72) Inventor: Keightley, Ross, Purley Surrey CR3 2NN (GB)
(74) Representative: Fry, Alan Valentine

(56) References cited:
- GB-A- 2 207 841
- US-A- 2 701 427
- US-A- 2 983 068
- US-A- 4 145 833

## Description

This invention relates to a weight for engagement onto an angler's fishing line.

Until recently, the vast majority of weights used by anglers consisted of a lead shot formed with a cut to define two gripper portions which could be urged together to grip a line positioned within the cut. The density and malleabiltiy of lead lent itself to the desired criteria of good weight characteristics and ease of engagement onto and disengagement from a fishing line. However, recognition of the harmful effects of lead as a pollutant now precludes or undermines its use as a fishing weight.

Other materials have been proposed. It has been found, however, that whilst many materials have the required weight characteristics, the malleability of such materials is less than that of lead with the result that engagement of shot produced from such materials onto a fishing line and its removal therefrom is difficult to achieve because of the force required either to close the gripper portions sufficiently to cause them to grip the line or to re-open the gripper portions to remove the shot from the line.

From US-PS-4145833 elongate lead sinkers are known which are intended to be positioned centrally onto a fishing line and which include a relatively deep cut in one elongate face and a shallower cut in the other face. The deepest of the two cuts extends to a depth approximately to one half of the sinker thickness. The reason for the presence of the shallower cut is not clear from a reading of US-PS-4145833. It has to be noted however, that the amount of material present between the extremities of the deep and shallow cuts and the lack of any grain refinement of this material effectively precludes the use of this material as a fulcrum, particularly for materials which are less malleable than lead. US-A-2 701 427 discloses a fishing weight having the features contained in the preamble of Claim 1 and in which cuts are produced by pressing.

The present invention sets out to provide a fishing weight which is produced from tin or copper, and which can readily be manipulated for ease of engagement onto and disengagement from a fishing line.

According to the present invention, a fishing weight comprises a generally spherical shot produced from tin or copper which has formed in one face a cut which extends to a depth greater than one half of the diameter of the weight and which defines gripper portions movable towards and away from each other to enable the shot to engage and be disengaged from a fishing line, and in its face opposite to said one face a second shallower cut, the arrangement being such that the shot material disposed between the innermost extents of the two cuts defines a hinge or fulcrum of grain refined material about which the gripper members can turn to assist engagement of the shot onto a fishing line and disengagement therefrom, the thickness of material disposed between the innermost extents of the two cuts representing between not less than 10% and 20% of the shot diameter.

Typically, the thickness of material disposed between the innermost extents of the two cuts represents between 10% and 20% of the shot diameter.

The fishing weight as a whole has a density greater than that of water.

Preferably the two cuts extend inwardly generally along a true diameter of the shot.

The two cuts in the shot may be formed by a single operation by passing the shot between a pair of contra-rotating forming tools. In this way, the shot material disposed between the innermost extents of the shot is worked during the forming process to effect grain refinement thereby to enhance its ability to act as a fulcrum. The starting material for producing shot in accordance with the invention is preferably wire whose cross section conforms generally to the required shot diameter.

The invention will now be described, by way of example only, with reference to the accompanying diagrammatic drawings, in which:-
Figure 1 is a side view of a fishing weight in accordance with the invention;
Figure 2 is a front view of the fishing weight shown in Figure 1; and
Figure 3 is a rear view of the fishing weight illustrated.

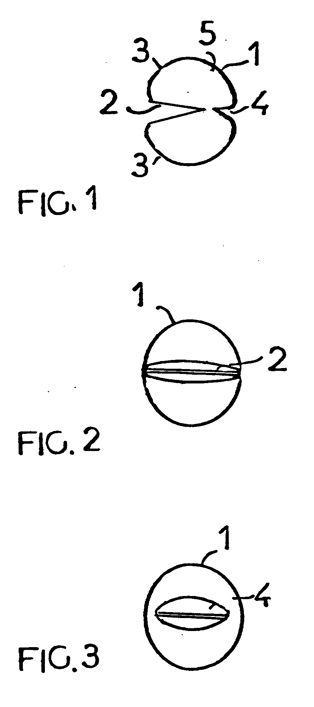

Referring to Figures 1 to 3, the fishing weight illustrated comprises a substantially spherical tin shot 1 which has formed in one face a cut 2 which extends generally along a true diameter of the shot to a distance greater than one half of that diameter. Two gripper portions 3 are defined by the cut 2, these gripper portions being movable towards and away from one another to enable the shot to be engaged onto a fishing line. In the face of the shot directly opposite to the cut 2, a more shallow cut or groove 4 is formed. The thickness of the material disposed between the innermost extents of the two cuts is between 10% and 20% of the shot diameter. The following table shows typical relationships between hinge material thickness and shot diameter for a variety of shot sizes:-

| Shot Size | Shot Diameter(mm) | Hinge Thickness(mm) |
|---|---|---|
| SS6 | 7.50 | 0.75 |
| AAA | 6.00 | 0.75 |
| BB | 4.75 | 0.70 |
| 1 | 4.35 | 0.65 |
| 3 | 4.00 | 0.65 |
| 4 | 3.75 | 0.65 |
| 5 | 3.50 | 0.60 |

Between the innermost edges of the two cuts 2, 4, a strip of grain refined material 5 is disposed which extends across the full width of the shot. The strip 5 effectively defines a fulcrum about which the the gripper portions 3 can pivot to assist manipulation of the shot during use. Thus, shot in accordance with the invention is produced from tin or copper.

Each gripper portion is chamfered adjacent its free end to facilitate entry of a fishing line into the cut 4. The narrowest width of the cut or groove 4 may be as small as 2 thousandths of an inch (0.050mm), i.e. less than the width of the smallest line to be used with the weight.

The cuts, 2, 4, are made by passing the shot between two contra-rotating discs whereby the shot material disposed between the innermost extents of the slots is worked to effect grain refinement and to enhance its ability to act as a fulcrum. The start material for the shot is preferably tin wire whose cross section conforms generally to the required diameter of the final shot product.

It will be appreciated that the foregoing is merely exemplary of one embodiment of fishing weights in accordance with the invention and that modifications can readily be made thereto without departing from the true scope of the invention as expressed in the claims appended hereto. Thus, the cuts 2,4 could be formed by an operation different to that described above.

## Claims

1. A fishing weight comprising a generally spherical shot which has formed in one face a first cut which defines gripper portions movable towards and away from each other to enable the weight to engage and be disengaged from a fishing line, and in its face opposite to said one face a second cut, the material of the weight disposed between the innermost extents of the two cuts defining a hinge or fulcrum about which the gripper members can turn to assist engagement of the weight onto a fishing line and disengagement therefrom, the weight being characterised in that the shot is produced from tin or copper, that the second cut is shallower than the first, that the first cut (2) extends to a depth greater than one half of the diameter of the weight (1), that the material of the hinge or fulcrum is grain refined, and that the thickness of the material of the hinge or fulcrum represents between not less than 10% and 20% of the diameter of the weight.

2. A weight as claimed in Claim 1 characterised in that the thickness of the material of the hinge or fulcrum represents between 10% and 20% of the diameter of the weight.

3. A weight as claimed in Claim 1 or Claim 2 characterised in that the two cuts (2, 4) extend inwardly generally along a true diameter of the weight.

4. A weight as claimed in any one of claims 1 to 3 characterised in that grain refinement of the material of the hinge or fulcrum is effected by tooling operable to deform the spherical shot to produce the aforesaid cuts.

5. A weight as claimed in any one of Claims 1 to 4 characterised in that the two cuts are formed by a single operation by passing the generally spherical shot between a pair of contra-rotating forming tools.

6. A method of producing a fishing weight which comprises passing generally spherical pieces of tin or copper between a pair of contra-rotating forming tools to produce in opposite faces of such pieces two cuts, one of which extends to a depth greater than one half of the diameter of each piece and the other of which is of shallower depth, and to work the material of each piece between the innermost extents of the formed cuts to grain refine the same to define a hinge of grain refined material representing between 10% and 20% of the diameter of the weight about which gripper portions of the weight defined between the cuts can turn to assist engagement of the weights onto a fishing line and disengagement therefrom.

7. A method of manufacturing a fishing weight which comprises producing in opposite faces of a spherical piece of tin or copper two cuts by subjecting the spherical piece to the effects of tooling, one of which cuts extends to a depth greater than one half of the diameter of the piece and the other of which is of shallower depth, the material between the innermost extents of the formed cuts being worked by the tooling to grain refine the same to define a hinge of grain refined material representing between 10% to 20% of the diameter of the weight about which gripper portions of the weight defined between the cuts can turn to assist engagement of the weights onto a fishing line and disengagement therefrom.

8. A method as claimed in Claim 6 wherein the shot is produced from pieces cut from wire whose cross-section conforms generally to the required diameter of the fishing weights.

## Patentansprüche

1. Angelgewicht, umfassend ein allgemein sphärisches Kugelgewicht, in das in einer Stirnfläche ein erster Einschnitt, der Greiferabschnitte definiert, die aufeinander zu- und voneinander wegbewegt werden können, damit das Gewicht an die Angelschnur gehängt und von ihr abgehängt werden kann, und in seiner der genannten einen Stirnfläche gegenüberliegenden Stirnfläche ein zweiter Einschnitt geformt ist, wobei das zwischen den innersten Enden der zwei Einschnitte verteilte Material des Kugelgewichts ein Scharnier oder einen Hebeldrehpunkt definiert, um das oder den sich die Greiferelemente drehen können, um das Anhängen des Gewichts an eine Angelschnur und das Abhängen des Gewichts davon zu unterstützen, wobei das Gewicht dadurch gekennzeichnet ist, daß das Kugelgewicht aus Zinn oder Kupfer produziert wird, der zweite Einschnitt weniger tief ist als der erste, der erste Einschnitt (2) bis auf eine Tiefe reicht, die größer ist als eine Hälfte des Durchmessers des Gewichts (1), das Material des Scharniers oder der Hebeldrehpunkt kornverfeinert ist und die Dicke des Materials des Scharniers oder des Hebeldrehpunktes einen Anteil des Gewichtdurchmessers zwischen mindestens 10 % und 20 % darstellt.

2. Gewicht gemäß Anspruch 1, dadurch gekennzeichnet, daß die Dicke des Materials des Scharniers oder des Hebeldrehpunktes einen Anteil des Gewichtdurchmessers zwischen 10 % und 20 % darstellt.

3. Gewicht gemäß Anspruch 1 oder 2, dadurch gekennzeichnet, daß die zwei Einschnitte (2, 4) sich allgemein entlang einem echten Durchmesser des Gewichts nach innen erstrecken.

4. Gewicht gemäß einem der Ansprüche 1 bis 3, dadurch gekennzeichnet, daß die Kornverfeinerung des Materials des Scharniers oder des Hebeldrehpunktes mit zur Verformung des sphärischen Kugelgewichts zum Erzeugen der oben genannten Einschnitte geeigneten Werkzeuge ausgeführt wird.

5. Gewicht gemäß einem der Ansprüche 1 bis 4, dadurch gekennzeichnet, daß die zwei Einschnitte in einem einzigen Arbeitsgang durch Passieren des allgemein sphärischen Kugelgewichts zwischen einem Paar gegenläufiger Formwerkzeuge hindurch geformt werden.

6. Verfahren zur Herstellung eines Angelgewichts, umfassend das Passieren allgemein sphärischer Zinn- oder Kupferstücke zwischen einem Paar gegenläufiger Formwerkzeuge hindurch, um in gegenüberliegenden Stirnflächen derartiger Stücke zwei Einschnitte zu erhalten, von denen einer bis auf eine Tiefe reicht, die größer ist als eine Hälfte des Durchmessers jedes Stücks, und der andere nicht so tief ist, und um das Material jedes Stücks zwischen den innersten Enden der geformten Einschnitte zur Kornverfeinerung zu bearbeiten, um ein Scharnier aus kornverfeinertem Material zu definieren, das einen Anteil des Gewichtdurchmessers zwischen 10 % und 20 % darstellt, um das sich zwischen den Einschnitten definierte Greiferabschnitte des Gewichts drehen können, um das Anhängen der Gewichte an eine Angelschnur und das Abhängen davon zu unterstützen.

7. Verfahren zur Herstellung eines Angelgewichts, umfassend das Anbringen von zwei Einschnitten in gegenüberliegenden Stirnflächen eines sphärischen Zinn- oder Kupferstücks, indem das sphärische Stück den Einwirkungen von Werkzeugen ausgesetzt wird, von denen ein Einschnitt bis auf eine Tiefe reicht, die größer ist als eine Hälfte des Durchmessers des Stücks, und der andere nicht so tief ist, und wobei das Material jedes Stücks zwischen den innersten Enden der geformten Einschnitte zur Kornverfeinerung mit Werkzeugen bearbeitet wird, um ein Scharnier aus kornverfeinertem Material zu definieren, das einen Anteil des Gewichtdurchmessers zwischen 10 % und 20 % darstellt, um das sich zwischen den Einschnitten definierte Greiferabschnitte des Gewichts drehen können, um das Anhängen der Gewichte an eine Angelschnur und das Abhängen davon zu unterstützen.

8. Verfahren gemäß Anspruch 6, wobei das Kugelgewicht von Drahtschnittstücken produziert wird, deren Querschnitt allgemein dem gewünschten Durchmesser der Angelgewichte entspricht.

## Revendications

1. Un lest de pêche comprenant généralement une grenaille sphérique sur laquelle on a formé sur l'une des faces une première entaille qui définit les sections de serrage pouvant se déplacer l'une contre l'autre, ou pouvant s'éloigner l'une de l'autre, de façon à permettre au lest de s'engager sur la ligne de pêche ou de s'en désengager, et qui dans la face opposée à la face citée précédemment comporte une deuxième entaille, le matériau du lest disposé entre les portées internes des deux entailles définissant une charnière ou un axe autour desquels les sections de serrage peuvent pivoter afin de faciliter l'engagement du lest sur la ligne de pêche et son désengagement de celle-ci, le lest étant caractérisé par le fait que la grenaille est fabriquée en étain ou en cuivre, que la deuxième entaille est moins profonde que la première, que la première entaille (2) descend à une profondeur supérieure à la moitié du diamètre du lest (1), que le matériau de la charnière ou de l'axe a un grain fin, et que l'épaisseur du matériau de la charnière ou de l'axe n'est pas inférieure à 10% et peut représenter jusqu'à 20% du diamètre du lest.

2. Un lest, selon les stipulations de la revendication 1, qui se caractérise par le fait que l'épaisseur du matériau de la charnière ou de l'axe représente entre 10% et 20% du diamètre du lest.

3. Un lest, selon les stipulations de la revendication 1 ou de la revendication 2, qui se caractérise par le fait que les deux entailles (2, 4) se prolongent vers l'intérieur généralement le long du diamètre véritable du lest.

4. Un lest, selon les stipulations de l'une quelconque des revendications 1 à 3, qui se caractérise par le fait que le recuit d'affinage du matériau de la charnière ou de l'axe est effectué par un outillage capable de déformer la grenaille sphérique dans le but de produire les entailles susmentionnées.

5. Un lest, selon les stipulations de l'une quelconque des revendications 1 à 4, qui se caractérise par le fait que les deux entailles sont formées par une seule opération en faisant passer la grenaille généralement sphérique entre une paire d'outils de formage tournant en sens inverse l'un par rapport à l'autre.

6. Une méthode permettant de produire un lest de pêche qui comprend le passage de pièces généralement sphériques, en étain ou en cuivre, entre une paire d'outils de formage tournant en sens inverse l'un par rapport à l'autre, afin de produire dans les faces opposées de ces pièces deux entailles, l'une d'entre elles s'étend à une profondeur supérieure à la moitié du diamètre de chaque pièce, et l'autre entaille a une profondeur plus faible, et de façonner le matériau de chaque pièce entre les portées internes des entailles formées, pour effectuer le recuit d'affinage de celles-ci afin de définir une charnière d'un matériau à grain fin représentant entre 10% et 20% du diamètre du lest autour de laquelle les sections de serrage du lest défini entre les entailles peuvent pivoter afin de faciliter l'engagement des lests sur la ligne de pêche et leur désengagement de celle-ci.

7. Une méthode permettant de fabriquer un lest de pêche qui comprend la production dans les faces opposées d'une pièce sphérique, en étain ou en cuivre, deux entailles en soumettant la pièce sphérique à l'action d'un outillage, l'une de ces entailles s'étend à une profondeur supérieure à la moitié du diamètre de la pièce, et l'autre a une profondeur plus faible, le matériau entre les portées internes des entailles formées étant façonné par l'outillage pour effectuer le recuit d'affinage de celles-ci afin de définir une charnière d'un matériau à grain fin représentant entre 10% et 20% du diamètre du lest autour de laquelle les sections de serrage du lest défini entre les entailles peuvent pivoter afin de faciliter l'engagement des lests sur la ligne de pêche et leur désengagement de celle-ci.

8. Une méthode, selon les stipulations de la revendication 6, dans le cadre de laquelle la grenaille est produite à partir de pièces découpées sur des fils dont la section transversale correspond généralement au diamètre requis pour les lests de pêche.
